# EUROPEAN PATENT SPECIFICATION

(11) **EP 2 868 302 B1**
(45) Date of publication and mention of the grant of the patent: **09.03.2016**
(21) Application number: 14190776.6
(22) Date of filing: 29.10.2014
(51) Int. Cl.: A61G 7/16, A61G 5/00, A61G 5/10, A61G 7/015, A61G 7/053, A61G 5/12, A61G 5/04

(54) **Method for controlling separatable bed, and separatable bed**
Verfahren zur Steuerung eines trennbaren Betts und trennbares Bett
Procédé de commande de lit séparable et lit séparable

(30) Priority: 05.11.2013 JP 2013229160
(43) Date of publication of application: 06.05.2015
(73) Proprietor: Panasonic Intellectual Property Management Co., Ltd., Osaka-shi, Osaka 540-6207 (JP)
(72) Inventor: Kume, Yohei, Osaka, 540-6207 (JP); Tsukada, Shohei, Osaka, 540-6207 (JP); Kawakami, Hideo, Osaka, 540-6207 (JP)
(74) Representative: Vigand, Philippe

(56) References cited:
- WO-A1-2013/042334
- JP-B2- 5 048 868

## Description

### TECHNICAL FIELD

The present disclosure relates to a separatable bed that can be separated into a wheelchair unit and a bed unit, and to a method for controlling the separatable bed.

### BACKGROUND ART

In a hospital or a nursing care facility, transfer assistance is performed a plurality of times a day in many cases. The transfer assistance is to transfer a care receiver from a bed to a wheelchair (or from a wheelchair to a bed). This transfer assistance can be a physical burden of a care giver and cause lower-back pain. Here, the care receiver is a person who receives care, such as a patient, and the care giver is a person who gives care, such as a nurse.

In order to reduce such a physical burden in the transfer assistance, a separatable bed in which part of the bed is separated for use as an electric wheelchair is proposed (see Patent Literature 1, for example).

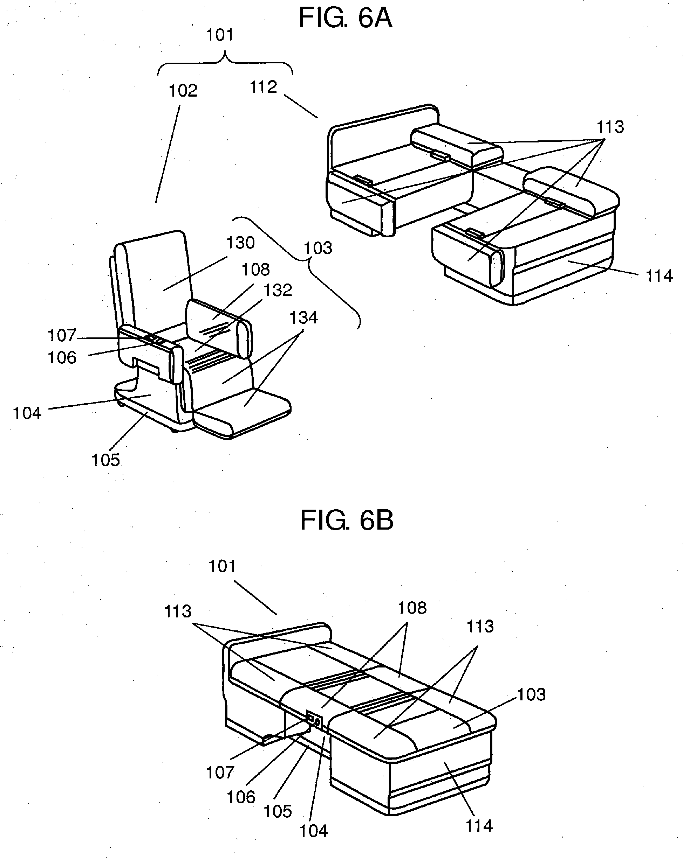

Fig. 6A is a schematic perspective view of conventional separatable bed 101 in a separated state. Fig. 6B is a schematic perspective view of conventional separatable bed 101 in a combined state. Separatable bed 101 is formed of wheelchair unit 102 and bed unit 112. Wheelchair unit 102 includes chair part 103, wheelchair body 104, and moving part 105. Chair part 103 includes backrest 130, seat 132, footrest part 134, and armrest part 108. Armrest part 108 has first operating part 106 and operating switch 107.

Chair part 103 is formed of a plurality of dividable members coupled to each other. Wheelchair body 104 supports chair part 103. Moving part 105 moves wheelchair unit 102. Using first operating part 106, an operator, such as a care receiver, instructs the operation of bringing chair part 103 close to moving part 105. Using operating switch 107, the operator instructs the operation of combining and separating wheelchair unit 102 and bed unit 112.

Bed unit 112 includes mattress face part 113 and bed body 114. Mattress face part 113 is formed of a plurality of dividable members. Bed body 114 supports mattress face part 113.

A description is provided for combining operation in conventional separatable bed 101. A care receiver sitting in wheelchair unit 102 moves wheelchair unit 102 to the vicinity of bed unit 112 by operating first operating part 106. Once the care receiver depresses operating switch 107, a series of combining operation is automatically performed even after the care receiver removes the hand from operating switch 107. The combining operation of separatable bed 101 includes first posture changing, first moving operation, second posture changing, and bed raising operation. First, wheelchair unit 102 performs the first posture changing in which entire wheelchair part 103 of wheelchair unit 102 tilts backward while maintaining a sitting posture. After the first posture changing is completed, wheelchair unit 102 performs the first moving operation in which the wheelchair unit approaches bed unit 112 while correcting displacement of the relative position and posture with respect to bed unit 112. Next, after the first moving operation is completed by contact of wheelchair unit 102 with bed unit 112, wheelchair unit 102 performs the second posture changing in which chair part 103 deforms into a flat posture. After completion of the second posture changing, the bed raising operation is performed such that bed body 114 is raised and wheelchair unit 102 is combined into bed unit 112. The combining operation is completed by the above operations. Separatable bed 101 after the completion of the combining operation is used as a general electric nursing bed.

That is, in conventional separatable bed 101, once the operating switch is depressed, the above series of combining operations are automatically performed continuously. In conventional separatable bed 101, similarly, once the operating switch is depressed, a series of separating operation is also automatically performed continuously.

In conventional separatable bed 101, the limbs, for example, of a care receiver can be caught between bed unit 112 and wheelchair unit 102 when wheelchair unit 102 is combined into or separated from bed unit 112. In the operation of an electric nursing bed, hold-to-run control is known. In the hold-to-run control, not all the operations are performed automatically, but operation is continued only while the operator is depressing the operating switch and the operation is stopped when the operator removes the hand from the operating switch.

However, unlike the operation of the electric nursing bed, combining or separating operation of separatable bed 101 is formed of a plurality of different operation steps. For instance, while the operator is continuously depressing operating switch 107, chair part 103 tilts backward and subsequently wheelchair unit 102 moves toward bed unit 112. Subsequently, wheelchair unit 102 combines with bed unit 112. Thus, even if hold-to-run control is used, at changeover of operation steps, a care receiver or a care giver cannot anticipate the changeover of operations. Thus, the care receiver or the care giver continuously depresses operating switch 107, and accidents, such as the limbs, for example, being caught, can occur.

### Citation List

### Patent Literature

**PTL1** Japanese Patent Unexamined Publication No. 5048868

### SUMMARY OF THE INVENTION

In a method for controlling a separatable bed, the separatable bed includes a wheelchair unit and a bed unit. The wheelchair unit includes an operating switch used for instructing combining operation or separating operation, each of which is formed of a plurality of operation steps. After at least one of the operation steps is completed, the at least one of the operation steps does not move on to a next one of the operation steps when the operating switch is continuously depressed. When the depressed operating switch is released and thereafter the operating switch is depressed again, the at least one of the operation steps moves on to the next one of the operation steps.

A separatable bed includes the following elements:
a wheelchair unit that includes an operating switch used for instructing combining operation or separating operation each formed of a plurality of operation steps, and a first controller; and
a bed unit.

After at least one of the operation steps is completed, the first controller does not cause the at least one of the operation steps to move on to a next one of the operation steps while the operating switch is continuously depressed. When the depressed operating switch is released and thereafter the operating switch is depressed again, the first controller causes the at least one of the operation steps to move on to the next one of the operation steps.

### DESCRIPTION OF DRAWINGS

Fig. 1A is a schematic perspective view of a separatable bed in a separated state in accordance with an exemplary embodiment of the present invention.
Fig. 1B is a schematic perspective view of the separatable bed in a combined state in accordance with the exemplary embodiment.
Fig. 2A is a diagram for explaining tilting operation of the separatable bed in accordance with the exemplary embodiment.
Fig. 2B is a diagram for explaining the tilting operation of the separatable bed in accordance with the exemplary embodiment.
Fig. 3A is a diagram for explaining reclining operation of the separatable bed in accordance with the exemplary embodiment.
Fig. 3B is a diagram for explaining the reclining operation of the separatable bed in accordance with the exemplary embodiment.
Fig. 4A is a flowchart showing combining operation of the separatable bed in accordance with the exemplary embodiment.
Fig. 4B is a flowchart showing the combining operation of the separatable bed in accordance with the exemplary embodiment.
Fig. 5A is a flowchart showing separating operation of the separatable bed in accordance with the exemplary embodiment.
Fig. 5B is a flowchart showing the separating operation of the separatable bed in accordance with the exemplary embodiment.
Fig. 6A is a schematic perspective view of a conventional separatable bed in a separated state.
Fig. 6B is a schematic perspective view of the conventional separatable bed in a combined state.

### DESCRIPTION OF EMBODIMENT

An exemplary embodiment of the present invention is described with reference to the accompanying drawings. Identical elements have the same reference marks, and the description of these elements may be omitted. For easy understanding, each element is mainly shown schematically in the drawings.

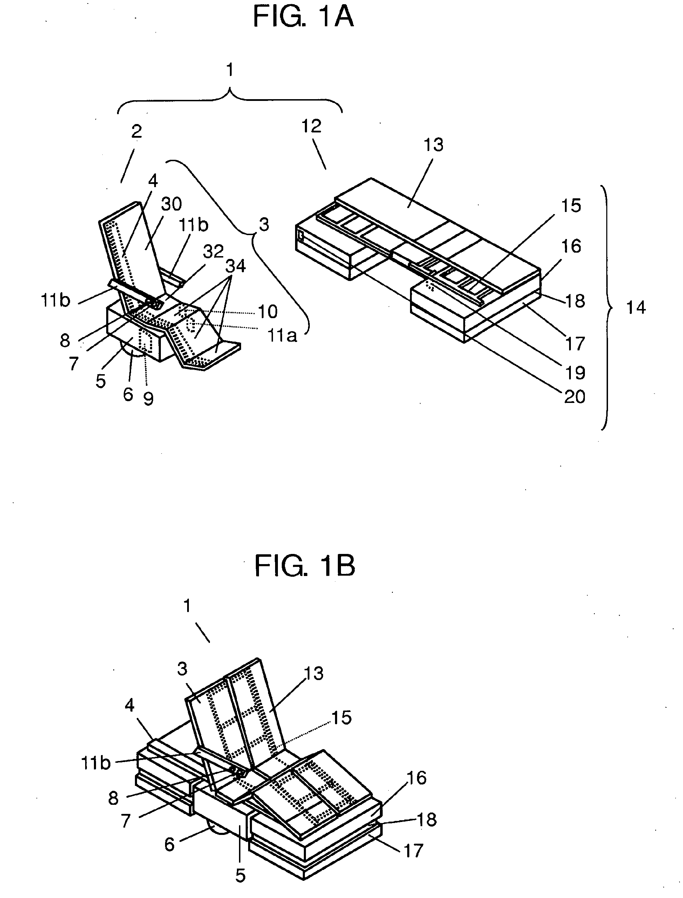

Fig. 1A is a schematic perspective view of separatable bed 1 in a separated state in accordance with the exemplary embodiment. Fig. 1B is a schematic perspective view of separatable bed 1 in a combined state in accordance with the exemplary embodiment. Separatable bed 1 includes wheelchair unit 2 and bed unit 12.

Wheelchair unit 2 includes chair part 3, first base part 5, and first moving part 6. Chair part 3 includes backrest 30, seat 32, footrest part 34, armrest part 11b, and first guide part 4. Armrest part 11b has first operating part 7 and operating switch 8. First base part 5 includes first controller 9, measuring part 10, and transmitter 11a.

First guide part 4 is coupled to first base part 5 and supports chair part 3. First moving part 6 moves wheelchair unit 2. Measuring part 10 measures the distance and angle between first moving part 6 and an obstacle around the first moving part. Transmitter 11a transmits, to bed unit 12, a command to raise or lower the bet unit. Armrest part 11b works as the armrests for the operator.

Chair part 3 is formed of a plurality of dividable members coupled to each other. Thus, chair part 3 is bendable. First operating part 7 is used to instruct chair part 3 to change the posture thereof or first moving part 6 to move. Operating switch 8 is used to instruct combining operation or separating operation. The combining operation is the operation for combining wheelchair unit 2 into bed unit 12. The separating operation is the operation for separating wheelchair unit 2 from bed unit 12. Based on the instruction (signal) from first operating part 7 or operating switch 8, first controller 9 controls the drive of chair part 3 and first moving part 6.

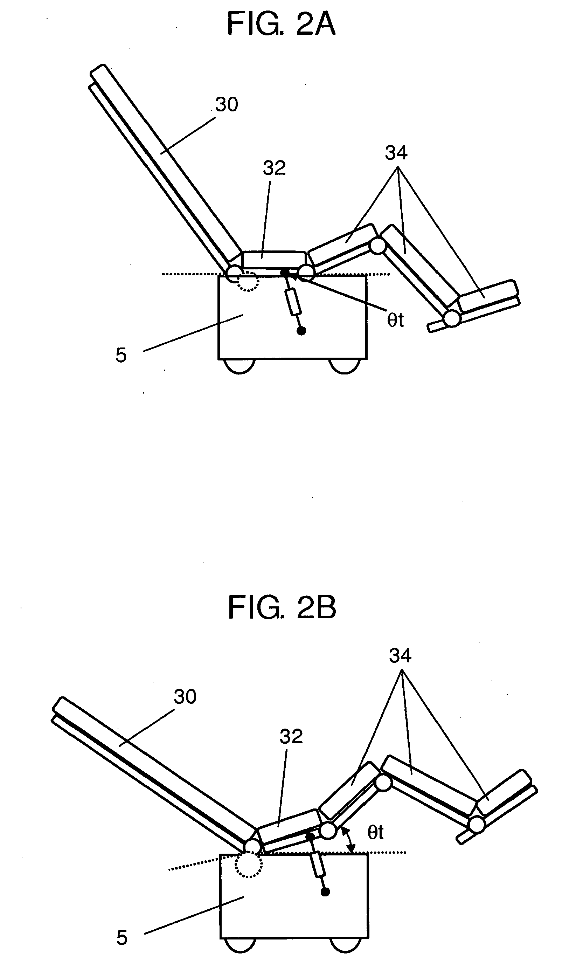

Each of Fig. 2A and Fig. 2B is a diagram for explaining tilting operation of the separatable bed in accordance with the exemplary embodiment. Fig. 2A shows a sitting posture.

Chair part 3 changes the posture thereof in conjunction with first guide part 4. As the posture changing, chair part 3 performs two types of operation, i.e. tilting operation and reclining operation. The tilting operation is the operation in which entire chair part 3 tilts backward and forward while chair part 3 maintains the sitting posture, for example. The operation of tilting chair part 3 backward is defined as tilting-ascending operation (the operation from Fig. 2A to Fig. 2B). The operation of tilting chair part 3 forward is defined as tilting-descending operation (the operation from Fig. 2B to Fig. 2A). In other words, the operation in which the bottom face of seat 32 tilts with respect to first base part 5 by a predetermined angle is the tilting-ascending operation. The operation in which the bottom face of seat 32 approaches the state of being parallel to the top face of first base part 5 is the tilting-descending operation.

As shown in Fig. 2A and Fig. 2B, the angle between the bottom face of seat 32 and the top face of first base part 5 is defined as tilting angle θt. In the tilting-descending operation, tilting angle θt changes from 45° to 0°. In the tilting-ascending operation, tilting angle θt changes from 0° to 45°. The tilting-descending operation and the tilting-ascending operation are generically referred to as tilting operation.

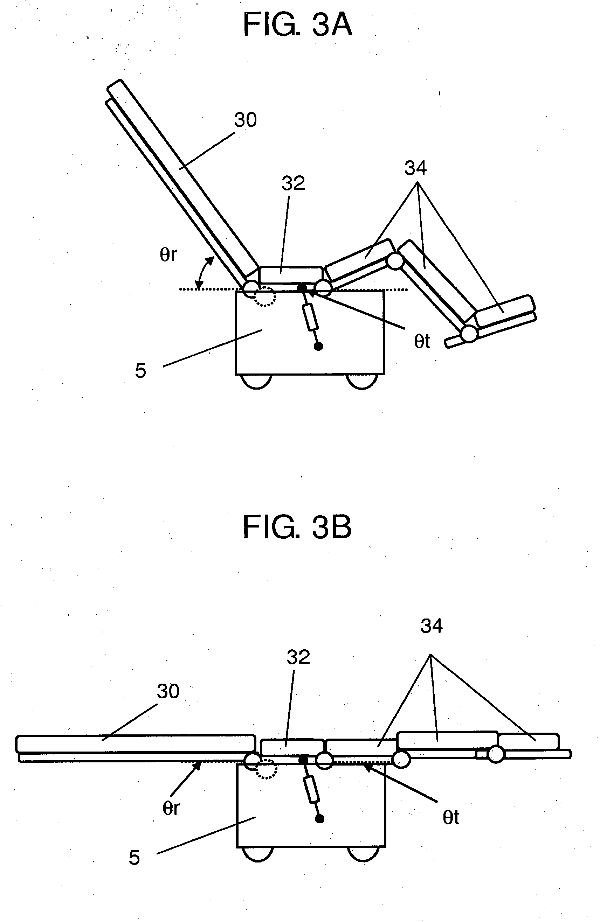

Each of Fig. 3A and Fig. 3B is a diagram for explaining reclining operation of the separatable bed in accordance with the exemplary embodiment. Fig. 3B is a diagram showing a fully flat posture.

The reclining operation is the operation of changing the posture from the sitting posture to the fully flat posture or vice versa. The operation of changing the sitting posture to the fully flat posture is defined as reclining-descending operation. The operation of changing the fully flat posture to the sitting posture is defined as reclining-ascending operation. The fully flat posture is the posture in which backrest 30, seat 32, and footrest part 34 are coplanar with each other.

That is, the operation of tilting backrest 30 backward and making footrest part 34 flat is defined as the reclining-descending operation (the operation from Fig. 3A to Fig. 3B). In other words, the operation of making the top face of seat 32, the top face of footrest part 34, and the front face of backrest 30 coplanar with each other is defined as the reclining-descending operation. The operation of tilting backrest 30 forward from a horizontal state and bending footrest part 34 is defined as the reclining-ascending operation (the operation from Fig. 3B to Fig. 3A). In other words, the operation of moving footrest part 34 and backrest 30 such that the footrest part has a predetermined angle with respect to seat 32 and the backrest has a predetermined angle with respect to seat 32 is defined as the reclining-ascending operation. The reclining-descending operation and the reclining-ascending operation are generically referred to as reclining operation.

As shown in Fig. 3A and Fig. 3B, the angle between backrest 30 and the top face of first base part 5 is defined as reclining angle θr. In the reclining-descending operation, reclining angle θr changes from 70° to 0°. In the reclining-ascending operation, reclining angle θr changes from 0° to 70°.

In the sitting posture, reclining angle θr is 70°, for example, and tilting angle θt is 0°, for example. In the fully flat posture, reclining angle θr is 0°, for example, and tilting angle θt is 0°, for example.

By omni-directional wheels, first moving part 6 can move in any direction, that is, can move backward and forward, rightward and leftward, and diagonally, and rotate. In the exemplary embodiment, as the omni-directional wheels in first moving part 6, four omni-wheels are used.

Measuring part 10 is fixed to the lower left portion of wheelchair unit 2. Measuring part 10 is a sensor for measuring the distance and angle between wheelchair unit 2 and an obstacle around the wheelchair unit. Measuring part 10 is used to determine the relative position and displacement between wheelchair unit 2 and bed unit 12 in the operation of combining or separating wheelchair unit 2 and bed unit 12. In the exemplary embodiment, a laser measurement range sensor is used as measuring part 10.

Bed unit 12 includes mattress face part 13 and second body 14. Mattress face part 13 is formed of a plurality of dividable members. Second body 14 includes second guide part 15, upper part 16, second base part 17, elevator 18, second controller 19, and second operating part 20. Second guide part 15 is a mechanism for changing the posture of mattress face part 13, and supports mattress face part 13. Upper part 16 fixes second guide part 15. Second base part 17 supports upper part 16. Elevator 18 raises or lowers upper part 16 with respect to second base part 17. Second controller 19 performs various types of control for bed unit 12 by receiving, from transmitter 11a of wheelchair unit 2, a raising/lowering command to elevator 18, for example. The operator transmits the raising/lowering command to elevator 18, by operating second operating part 20.

As shown in Fig. 1A, in a wheelchair state where wheelchair unit 2 is separated from bed unit 12, the posture of chair part 3 is changed by first guide part 4. By operating first operating part 7, the operator changes the posture of chair part 3 using the tilting operation or the reclining operation, or moves the chair part using first moving part 6.

As shown in Fig. 1B, in a bed state where wheelchair unit 2 is combined into bed unit 12, the mechanism for changing the posture is switched from first guide part 4 to second guide part 15. That is, second guide part 15 changes the posture of combined chair part 3 and mattress face part 13. After the completion of the combining operation, by operating second operating part 20, the operator performs the operations, such as raising/lowering the back portion or foot portion, and raising/lowering the combined units, as a nursing care bed.

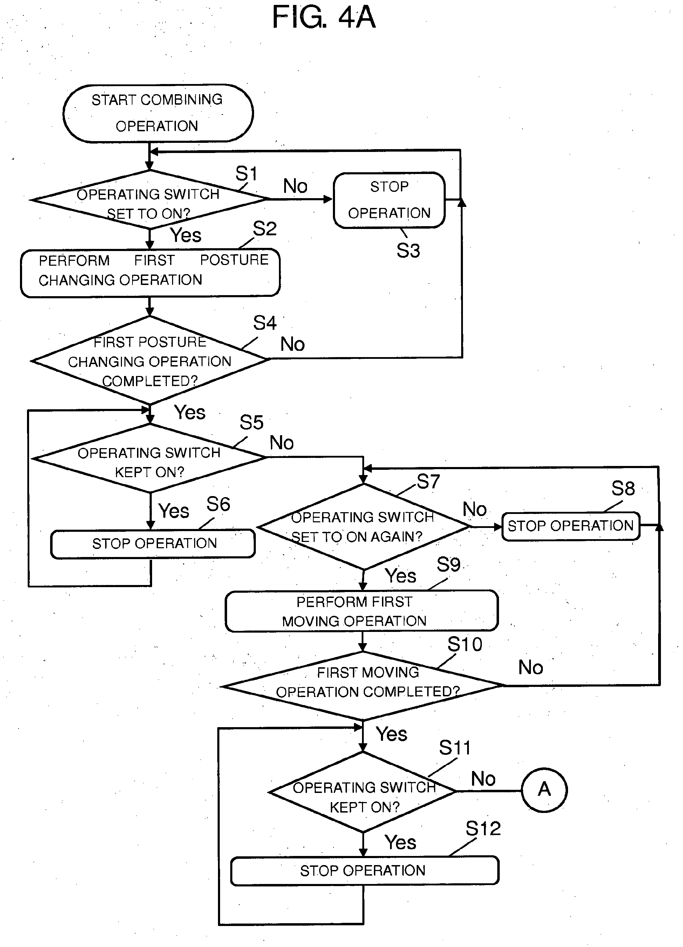

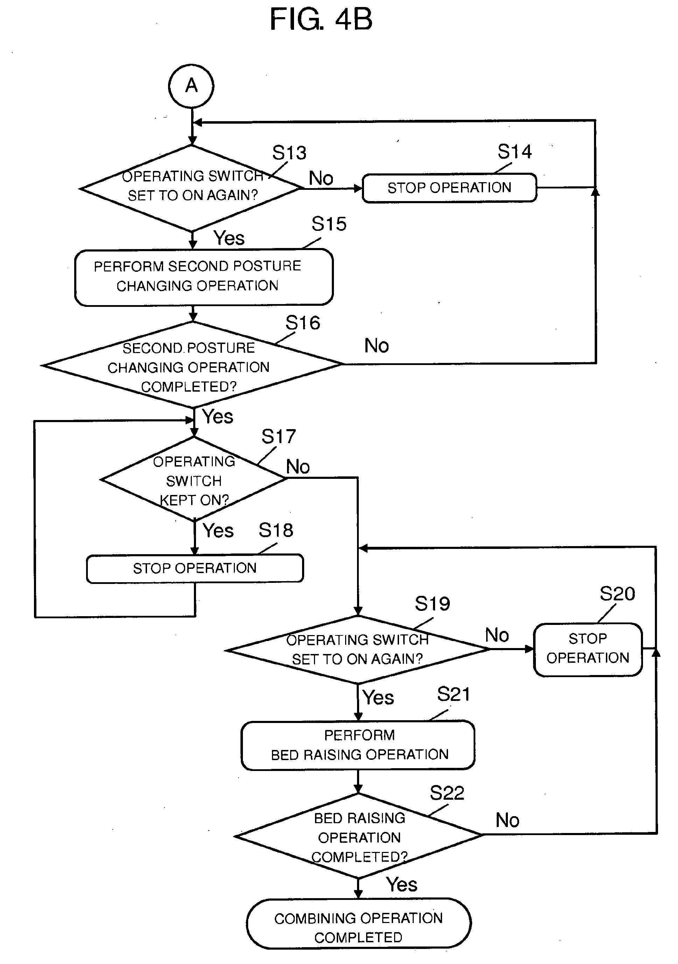

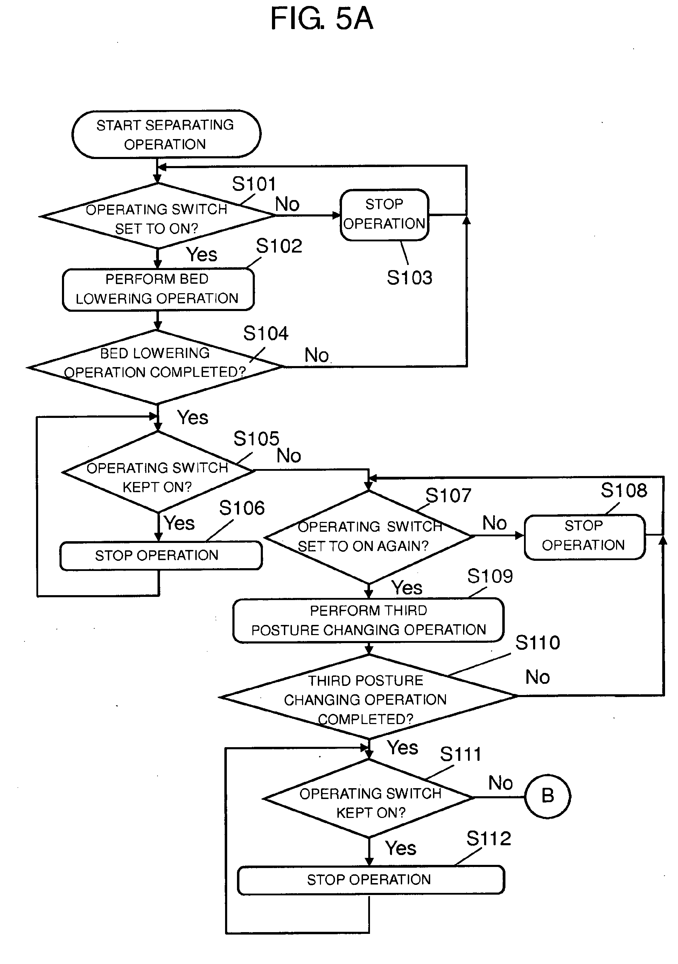

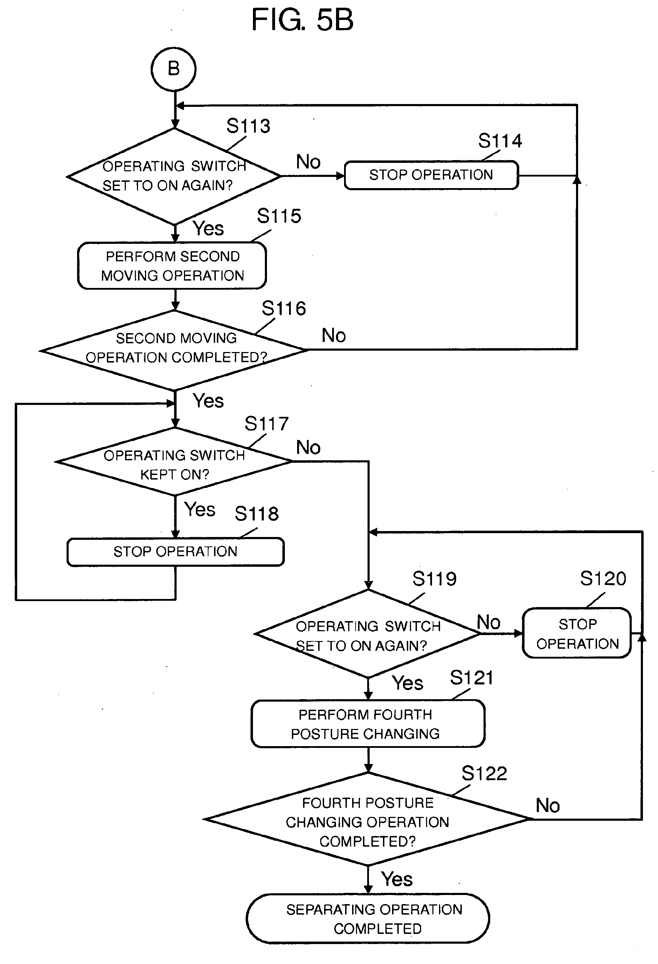

Next, combining operation and separating operation of separatable bed 1 configured as above are described. Here, the combining operation is the operation of combining wheelchair unit 2 into bed unit 12. The separating operation is the operation of separating wheelchair unit 2 from bed unit 12. Each of Fig. 4A and Fig. 4B is a flowchart showing the combining operation of separatable bed 1 in accordance with the exemplary embodiment. Each of Fig. 5A and Fig. 5B is a flowchart showing the separating operation of separatable bed 1 in accordance with the exemplary embodiment.

First, with reference to Fig. 4A and Fig. 4B, a description is provided for the combining operation of combining wheelchair unit 2 into bed unit 12 in order to change the wheelchair state to the bed state.

The combining operation is formed of four different operation steps (a first operation step through a fourth operation step). In each of the following four operation steps, while operating switch 8 is continuously depressed, the operation step is continued until the operation in the operation step is completed. However, after each operation step is completed, the operation is stopped once. In the control of separatable bed 1 of the exemplary embodiment, control goes to the next operation step when the operator releases depressed operating switch 8 once and depresses operating switch 8 again. That is, in the control of separatable bed 1 of the exemplary embodiment, even when operating switch 8 is continuously depressed, control does not go to the next step. In the combining operation of separatable bed 1 of the exemplary embodiment, hold-to-run control is performed, and further the operation is stopped once at changeover of the four operation steps even when operating switch 8 is continuously depressed. This procedure is also used in the separating operation.

In the first operation step, tilting-ascending operation of wheelchair unit 2 is performed as a first posture changing operation. In the second operation step, a first moving operation is performed such that wheelchair unit 2 is brought close to bed unit 12 while displacement of the relative position and posture between wheelchair unit 2 and bed unit 12 measured in measuring part 10 is corrected. In the third operation step, as a second posture changing operation, tilting-descending operation and reclining-descending operation of wheelchair unit 2 are performed. In the fourth operation step, by operation of raising bed unit 12 (to a bed height of 400 mm), operation of coupling wheelchair unit 2 and bed unit 12 is performed. In the combining operation of separatable bed 1 of the exemplary embodiment, the above four operation steps are sequentially performed so as to combine wheelchair unit 2 and bed unit 12.

Next, with reference to Fig. 4A and Fig. 4B, the combining operation of wheelchair unit 2 and bed unit 12 is detailed.

The posture of chair part 3 before the start of combination is represented by a tilting angle of 0° and a reclining angle of 70°. First, for preparation for combination, by operating first operating part 7, the operator moves wheelchair unit 2 to the vicinity of bed unit 12 using first moving part 6 such that bed unit 12 is within the measurement range of measuring part 10. When bed unit 12 is within the measurement range of measuring part 10, first controller 9 of wheelchair unit 2 recognizes the relation of the relative position and posture between wheelchair unit 2 and bed unit 12 based on the result in measuring part 10. At this time, preferably, an LED (not shown) disposed in first operating part 7 flashes so as to inform the operator that combination is ready. By completing preparation for combination in this manner, combination operation is started.

In the combination operation, first, the first operation step is performed as follows. The operator confirms that combination is ready, with the flashing LED of first operating part 7, and depresses operating switch 8. Then, first controller 9 determines whether or not operating switch 8 is set to ON (depressed) (step S1). When operating switch 8 is set to ON (Yes in S1), tilting-ascending operation is performed as the first posture changing operation (step S2). When operating switch 8 is set to OFF (No in S1), the operation is stopped (step S3) and control returns to step S1. That is, in steps S1 through S3, operation is performed only when operating switch 8 is depressed, and the operation is stopped when depressed operating switch 8 is released. This is hold-to-run control. Next, first controller 9 determines whether or not the first posture changing operation (tilting-ascending operation) is completed (step S4). Specifically, first controller 9 determines whether or not the first posture changing operation is completed and the tilting angle has reached 45°. When the tilting angle has reached 45°, first controller 9 determines that the first posture changing operation is completed (Yes in S4) and control goes to step S5. When the tilting angle has not reached 45° (No in S4), control returns to step S1. Then, tilting-ascending operation in response to operating switch 8 is performed until the tilting angle reaches 45°. In the configuration of the exemplary embodiment, it is determined that the tilting angle has reached 45° (completion of the first posture changing operation) when a first limit switch (not shown) disposed in the lower portion of backrest 30 is set to ON.

Next, the second operation step is performed. In the second operation step, first, first controller 9 determines whether or not operating switch 8 is kept ON (step S5). When operating switch 8 is kept ON (Yes in S5), first controller 9 stops operation (step S6) and control returns to step S5. When operating switch 8 is set to OFF (No in S5), control goes to step S7. Then, first controller 9 determines whether or not operating switch 8 is set to ON (depressed) again (step S7). When operating switch 8 is set to OFF (No in S7), control returns to step S7 because the operation is in the stopped state (step S8). When operating switch 8 is set to ON again (Yes in S7), a first moving operation is performed (step S9). Here, the state of Yes in step S7 means that operating switch 8 is set to ON (depressed) again, that is, depressed operating switch 8 is released once and depressed again. The first moving operation is moving operation in which wheelchair unit 2 approaches bed unit 12 while correcting displacement of the relative position and posture of the wheelchair unit with respect to bed unit 12. Next, first controller 9 determines whether or not the first moving operation is completed (wheelchair unit 2 is in contact with bed unit 12) (step S10). When wheelchair unit 2 is in contact with bed unit 12, it is determined that the first moving operation is completed (Yes in S10) and control goes to step S11. When wheelchair unit 2 is not in contact with bed unit 12 (No in S10), control returns to step S7 and the first moving operation in response to operating switch 8 is performed until wheelchair unit 2 makes contact with bed unit 12. In the configuration of the exemplary embodiment, it is determined that wheelchair unit 2 is in contact with bed unit 12 (completion of the first moving operation) when a second limit switch (not shown) disposed in the lower left portion of wheelchair unit 2 is set to ON.

Next, the third operation step is performed. First controller 9 determines whether or not operating switch 8 is kept ON (step S11). When operating switch 8 is kept ON (Yes in S11), first controller 9 stops operation (step S12) and control returns to step S11. When operating switch 8 is set to OFF (No in S11, i.e. the operator sets operating switch 8 to OFF), control goes to step S13. Then, first controller 9 determines whether or not operating switch 8 is set to ON (depressed) again (step S13). When operating switch 8 is set to OFF (No in S13), control returns to step S13 because the operation is in the stopped state (step S14). When operating switch 8 is set to ON again (Yes in S13), both tilting-descending operation and reclining-descending operation are performed simultaneously as the second posture changing operation (step S15). Here, in the exemplary embodiment, both tilting-descending operation and reclining-descending operation are performed. Thereby, backrest 30 tilts backward and footrest part 34 becomes flat. Further, the bottom face of seat 32 approaches the state of being parallel to the top face of first base part 5. Here, when the tilting-descending operation and the reclining-descending operation are performed simultaneously, the postures of seat 32 and footrest part 34 can be changed while the inclination angle of backrest 30 with respect to first base part 5 is maintained. This can reduce discomfort of the care receiver sitting in wheelchair unit 2. Next, first controller 9 determines whether or not the second posture changing operation is completed (i.e. the tilting angle is 0° and the reclining angle is 0°) (step S16). When both tilting angle and reclining angle are 0°, first controller 9 determines that the second posture changing operation is completed (Yes in S16) and control goes to step S17. When at least one of the tilting angle and the reclining angle is not 0° (No in S16), control returns to step S13 and the second posture changing operation in response to operating switch 8 is performed until both tilting angle and reclining angle become 0°. In the configuration of the exemplary embodiment, it is determined that both tilting angle and reclining angle are 0° (completion of the second posture changing operation) when a third limit switch (not shown) disposed in the lower portion of chair part 3 is set to ON.

Next, the fourth operation step is performed. First controller 9 determines whether or not operating switch 8 is kept ON (step S17). When operating switch 8 is kept ON (Yes in S17), first controller 9 stops operation (step S18) and control returns to step S17. When operating switch 8 is set to OFF (No in S17), control goes to step S19. First controller 9 determines whether or not operating switch 8 is set to ON (depressed) again (step S19). When operating switch 8 is set to OFF (No in S19), control returns to step S19 because the operation is in the stopped state (step S20). When the operating switch is set to ON again (Yes in S19), a bed raising command is transmitted from transmitter 11a to second controller 19 and thereby bed unit 12 is raised (bed raising operation) (step S21). Raising bed unit 12 makes the top face of mattress face part 13 of bed unit 12 coplanar with the top face of seat 32.

Next, first controller 9 determines whether or not the bed raising operation is completed (i.e. the bed height is increased to 400 mm) (step S22). When the bed height is 400 mm or greater, first controller 9 determines that the bed raising operation is completed (Yes in S22). Thus, the series of combining operations are completed. When the bed height is smaller than 400 mm (No in S22), control returns to step S19 and the bed raising operation in response to operating switch 8 is performed until the bed height becomes 400 mm or greater. In the configuration of the exemplary embodiment, it is determined that the bed height has reached 400 mm (completion of the bed raising operation) when a fourth limit switch (not shown) disposed on the left side face of first base part 5 is set to ON. In the fourth operation step, armrest part 11b may be housed in the back side of backrest 30 automatically, or by the manpower of a care giver, for example.

When the rise distance of the bed in the fourth operation step (bed raising operation) is short and thus limbs, for example, are less likely to be caught, the operation does not need to be stopped between the third operation step and the fourth operation step. That is, the third operation step and the fourth operation step may be performed continuously.

Further, in the second operation step (the first moving operation), a third party, such as a care giver, can inadvertently enter and be caught between wheelchair unit 2 and bed unit 12. In the third operation step (the second posture changing operation), the limbs, for example, of a care giver, for example, can be inadvertently caught between chair part 3 and mattress face part 13. Then, as a measure against accidents, such as being caught, the following setting may be made. Operation is further stopped once slightly before the completion of at least one of the respective operations such that the operation does not proceed unless operating switch 8 is set to ON again.

Next, with reference to Fig. 5A and Fig. 5B, a description is provided for the separating operation of separating wheelchair unit 2 from bed unit 12 in order to change the bed state to the wheelchair state.

The separating operation is formed of four different operation steps (a fifth operation step through an eighth operation step). In the fifth operation step, the operation of lowering bed unit 12 (to a bed height of 360 mm) is performed, and wheelchair unit 2 and bed unit 12 are decoupled. In the sixth operation step, as a third posture changing operation, both tilting-ascending operation and reclining-ascending operation are performed simultaneously. In the seventh operation step, a second moving operation is performed such that wheelchair unit 2 is separated from bed unit 12 while the displacement of the relative position and posture between bed unit 12 and wheelchair unit 2 measured in measuring part 10 is corrected. In the eighth operation step, as a fourth posture changing operation, tilting-descending operation is performed. In the separating operation of separatable bed 1 of the exemplary embodiment, these four operation steps are sequentially performed.

The posture of chair part 3 before the start of separation is represented by a tilting angle of 0° and a reclining angle of 0°. First, for preparation for separation, by operating first operating part 7, the operator selects a separation mode (separating operation). Then, by depressing operating switch 8, the separating operation is started.

First, the fifth operation step is performed. First controller 9 determines whether or not operating switch 8 is set to ON (depressed) (step S101). When operating switch 8 is set to ON (Yes in S101), a bed lowering command is transmitted from transmitter 11a to second controller 19 and bed unit 12 is lowered (bed lowering operation) (step S102). Lowering bed unit 12 makes the top face of bed unit 12 lower than the top face of wheelchair unit 2. When operating switch 8 is set to OFF (No in S101), first controller 9 stops operation (step S103) and control returns to step S101. Next, first controller 9 determines whether or not the bed lowering operation is completed (i.e. the bed height has reached 360 mm) (step S104). When the bed height has reached 360 mm, first controller 9 determines that the bed lowering operation is completed (Yes in S104) and control goes to step S105. When the bed height has not reached 360 mm (No in S104), control returns to step S101 and the bed lowering operation in response to operating switch 8 is performed until the bed height reaches 360 mm. In the configuration of the exemplary embodiment, it is determined that the bed height is 360 mm (completion of the bed lowering operation) when a fifth limit switch (not shown) disposed on the right side face of first base part 5 is set to ON.

Next, the sixth operation step is performed. First controller 9 determines whether or not operating switch 8 is kept ON (step S105). When operating switch 8 is kept ON (Yes in S105), first controller 9 stops operation (step S106) and control returns to step S105. When operating switch 8 is set to OFF (No in S105), control goes to step S107. Then, first controller 9 determines whether or not operating switch 8 is set to ON (depressed) again (step S107). When operating switch 8 is set to OFF (No in S107), control returns to step S107 because the operation is in the stopped state (step S108). When the operating switch is set to ON again (Yes in S107), both tilting-ascending operation and reclining-ascending operation are performed simultaneously as the third posture changing operation (step S109). Here, both tilting-ascending operation and reclining-ascending operation are performed simultaneously. Thereby, backrest 30 tilts forward and footrest part 34 bends. Seat 32 tilts with respect to the top face of first base part 5. Here, when the tilting-ascending operation and the reclining-ascending operation are performed simultaneously, the postures of seat 32 and footrest part 34 can be changed while the inclination angle of backrest 30 with respect to first base part 5 is maintained. This can reduce discomfort of the care receiver sitting in wheelchair unit 2. Next, first controller 9 determines whether or not the third posture changing operation is completed (i.e. the tilting angle is 45° and the reclining angle is 70°) (step S110). When the tilting angle is 45° and the reclining angle is 70°, first controller 9 determines that the third posture changing operation is completed (Yes in S110) and control goes to step S111. When the tilting angle is not 45° or the reclining angle is not 70° (No in S110), control returns to step S107 and the third posture changing operation in response to operating switch 8 is performed until the tilting angle becomes 45° and the reclining angle becomes 70°. In the configuration of the exemplary embodiment, it is determined that the tilting angle is 45° and the reclining angle is 70° (completion of the third posture changing operation) when a sixth limit switch (not shown) disposed in the lower portion of chair part 3 is set to ON.

Next, the seventh operation step is performed. First controller 9 determines whether or not operating switch 8 is kept ON (step S111). When operating switch 8 is kept ON (Yes in S111), first controller 9 stops operation (step S112) and control returns to step S111. When operating switch 8 is set to OFF (No in S111), control goes to step S113. Then, first controller 9 determines whether or not operating switch 8 is set to ON (depressed) again (step S113). When operating switch 8 is set to OFF (No in S113), control returns to step S113 because the operation is in the stopped state (step S114). When operating switch 8 is set to ON again (Yes in S113), the second moving operation is performed (step S115). Here, the second moving operation is the operation in which wheelchair unit 2 leaves bed unit 12 while correcting the displacement of the relative position and posture between bed unit 12 and wheelchair unit 2 measured in measuring part 10. Next, first controller 9 determines whether or not the second moving operation is completed (i.e. wheelchair unit 2 is spaced from bed unit 12 by 500 mm) (step S116). When wheelchair unit 2 is spaced from bed unit 12 by 500 mm, first controller 9 determines that the second moving operation is completed (Yes in S116) and control goes to step S117. When wheelchair unit 2 is not spaced from bed unit 12 by 500 mm (No in S116), control returns to step S113 and the second moving operation in response to operating switch 8 is performed until wheelchair unit 2 becomes spaced from bed unit 12 by 500 mm. In the configuration of the exemplary embodiment, measuring part 10 detects displacement of the relative position and posture between wheelchair unit 2 and bed unit 12. Further, using the measured data, it can be determined that wheelchair unit 2 is spaced from bed unit 12 by 500 mm (completion of the second moving operation).

Next, the eighth operation step is performed. First controller 9 determines whether operating switch 8 is kept ON (or set to OFF) (step S117). When operating switch 8 is kept ON (Yes in S117), first controller 9 stops operation (step S118) and control returns to step S117. When operating switch 8 is set to OFF (No in S177), control goes to step S119. Then, first controller 9 determines whether or not operating switch 8 is set to ON (depressed) again (step S119). When operating switch 8 is set to OFF (No in S119), control returns to step S119 because the operation is in the stopped state (step S120). When the operating switch is set to ON again (Yes in S119), tilting-descending operation is performed as the fourth posture changing operation (step S121). Next, first controller 9 determines whether or not the tilting-descending operation (the fourth posture changing operation) is completed (the tilting angle is 0°) (step S122). When the tilting angle is 0°, first controller 9 determines that the fourth posture changing operation is completed (Yes in S122) and the series of separating operations are completed. When the tilting angle is not 0° (No in S122), control returns to step S119 and the tilting-descending operation in response to operating switch 8 is performed until the tilting angle becomes 0°. In the configuration of the exemplary embodiment, first controller 9 determines that the tilting angle is 0° (completion of the fourth posture changing operation) when a seventh limit switch (not shown) disposed on the bottom face of chair part 3 is set to ON.

When the fall distance of the bed in the fifth operation step (bed lowering operation) is short and limbs, for example, are less likely to be caught, the operation does not need to be stopped between the fifth operation step and the sixth operation step. That is, the fifth operation step and the sixth operation step may be performed continuously.

As described above, a method for controlling separatable bed 1 includes a plurality of operation steps as combining operation or separating operation. Separatable bed 1 includes the following elements: wheelchair unit 2 that includes operating switch 8 used for instructing the combining operation or the separating operation; and bed unit 12.

In the method for controlling separatable bed 1 of the exemplary embodiment, after and while operating switch 8 is depressed, at least one of the plurality of operation steps is performed. However, the one of the operation steps is completed, the one of the operation steps does not move on to a next one of the operation steps even when operating switch 8 is depressed. The one of the operation steps moves on to the next one of the operation steps, when depressed operating switch 8 is released and thereafter operating switch 8 is depressed again.

Separatable bed 1 includes the following elements: wheelchair unit 2 including operating switch 8 and first controller 9; and bed unit 12. By detecting a signal from operating switch 8, first controller 9 transmits, to at least one of wheelchair unit 2 and bed unit 12, signals for instructing a plurality of operations for combining wheelchair unit 2 and bed unit 12, or signals for instructing a plurality of operations for separating wheelchair unit 2 from bed unit 12. Further, after at least one of the plurality of operations is completed, first controller 9 does not transmit a signal for instructing a next one of the operations even when operating switch 8 is depressed. When depressed operating switch 8 is released and thereafter operating switch 8 is depressed again, the first controller transmits the signal for instructing the next one of the operations.

The exemplary embodiment is composed of a series of combining operation formed of four different operation steps (a first operation step through a fourth operation step). The exemplary embodiment is composed of a series of separating operation formed of four different operation steps (a fifth operation step through an eighth operation step). Even if the operator continuously depresses operating switch 8 in these eight significantly different steps, the operation is stopped once at the time point when one operation step is completed. When the operator releases operating switch 8 and depresses the operating switch again, the operation step moves on to the next operation step. That is, only when the operator depresses operating switch 8 again, the operation step moves on to the different next operation step in which the operation is changed. The method for controlling separatable bed 1 of the exemplary embodiment can prevent the limbs, for example, of a care receiver or a care giver from being caught or prevent the care receiver or the care giver from colliding with the wheelchair unit at changeover of operation steps. Such an accident occurs because the care receiver or the care giver cannot anticipate the changeover. This method allows a separatable bed to operate safely.

Further, in separatable bed 1 configured as above, a care receiver, i.e. the operator, can freely and easily move from the bed to the wheelchair and vice versa with the intention of the care receiver. Thus, a care giver does not need to provide assistance of transfer between the bed and the wheelchair. This can reduce the physical burden of the care giver and contribute to the self-supported life of the care receiver.

The present disclosure can provide a method for controlling a separatable bed capable of operating safely in a series of combining operation or separating operation each formed of a plurality of different operation steps.

Since the separatable bed of the present disclosure is capable of operating safely, the separatable bed is useful in an ordinary family, hospital, nursing care facility, or the like where people who require nursing care live.

## Claims

1. A method for controlling a separatable bed (1), in which the separatable bed includes a wheelchair unit (2) and a bed unit (12), and the wheelchair unit includes an operating switch (8) used for instructing combining operation or separating operation, each of which is formed of a plurality of operation steps,
the method being **characterized in that**
after at least one of the operation steps is completed,
in the case of the operating switch (8) is continuously depressed, the at least one of the operation steps does not move on to a next one of the operation steps, and
in the case of the depressed operating switch (8) is released and thereafter the operating switch (8) is depressed again, the at least one of the operation steps moves on to the next one of the operation steps.

2. The method for controlling the separatable bed of claim 1, wherein
the wheelchair unit (2) further includes:
a chair part (3) including a backrest (30), a seat (32), and a footrest part (34); and
a first base part (5) supporting the chair part (3), and
in a case where
operation of tilting a bottom face of the seat (32) with respect to the first base part (5) by a predetermined angle is defined as tilting-ascending operation,
operation of bringing the bottom face of the seat (32) close to a state where the bottom face of the seat (32) is parallel to a top face of the first base part (5) is defined as tilting-descending operation, and
operation of making a top face of the seat (32), a top face of the footrest part (34), and a front face of the backrest (30) coplanar with each other is defined as reclining-descending operation,
as the plurality of operation steps in the combining operation, a first operation step, a second operation step, a third operation step, and a fourth operation step are sequentially performed such that
in the first operation step, the tilting-ascending operation is performed,
in the second operation step, the wheelchair unit (2) is brought close to the bed unit (12),
in the third operation step, the tilting-descending operation and the reclining-descending operation are performed, and
in the fourth operation step, the wheelchair unit (2) and the bed unit (12) are coupled.

3. The method for controlling the separatable bed of claim 2, wherein the tilting-descending operation and the reclining-descending operation are performed simultaneously in the third operation step.

4. The method for controlling the separatable bed of claim 2, wherein when the operating switch (8) is continuously depressed, the third operation step is not stopped and moves on to the fourth operation step.

5. The method for controlling the separatable bed of claim 2, wherein the second operation step is stopped once before completion of the second operation step, or the third operation step is stopped once before completion of the third operation step.

6. The method for controlling the separatable bed of claim 1, wherein
the wheelchair unit (2) further includes:
a chair part (3) including a backrest (30), a seat (32), and a footrest part (34); and
a first base part (5) supporting the chair part (3), and
in a case where
operation of tilting a bottom face of the seat (32) with respect to the first base part (5) by a predetermined angle is defined as tilting-ascending operation and
operation of tilting at least the backrest (30) with respect to the seat (32) by a predetermined angle is defined as reclining-ascending operation,
as the plurality of operation steps in the separating operation, a fifth operation step, a sixth operation step, and a seventh operation step are sequentially performed such that
in the fifth operation step, the wheelchair unit (2) and the bed unit (12) are decoupled,
in the sixth operation step, the tilting-ascending operation and the reclining-ascending operation are performed, and
in the seventh operation step, the wheelchair unit (2) is separated from the bed unit (12).

7. The method for controlling the separatable bed of claim 6, wherein the tilting-ascending operation and the reclining-ascending operation are performed simultaneously in the sixth operation step.

8. The method for controlling the separatable bed of claim 6, wherein when operation of bringing the bottom face of the seat (32) close to a state where the bottom face of the seat (32) is parallel to a top face of the first base part (5) is defined as tilting-descending operation, an eighth operation step of performing the tilting-descending operation is performed after the seventh operation step.

9. The method for controlling the separatable bed of claim 1, wherein
the wheelchair unit (2) includes:
a chair part (3) including a backrest (30), a seat (32), and a footrest part (34); and
a first base part (5) supporting the chair part (3), and
in a state where the wheelchair unit (2) and the bed unit (12) are separated, the plurality of operation steps includes:
a first operation step of tilting the chair part (3) to a predetermined angle with respect to the first base part (5) when the operating switch (8) is depressed;
a second operation step of bringing the wheelchair unit (2) close to the bed unit (12) when, after completion of the first operation step, the depressed operating switch (8) is released and thereafter the operating switch (8) is depressed again;
a third operation step of moving the backrest (30) such that a front face of the backrest (30) is coplanar with a top face of the seat (32) when, after completion of the second operation step, the depressed operating switch (8) is released and thereafter the operating switch (8) is depressed again; and
a fourth operation step of coupling the wheelchair unit (2) and the bed unit (12), after completion of the third operation step.

10. The method for controlling the separatable bed of claim 1, wherein
the wheelchair unit (2) includes:
a chair part (3) including a backrest (30), a seat (32), and a footrest part (34); and
a first base part (5) supporting the chair part (3), and
in a state where the wheelchair unit (2) and the bed unit (12) are combined, the plurality of operation steps includes:
a fifth operation step of decoupling the wheelchair unit (2) and the bed unit (12) when the operating switch (8) is depressed;
a sixth operation step of moving the backrest (30) such that the backrest (30) has a predetermined angle with respect to the seat (32), after completion of the fifth operation step; and
a seventh operation step of separating the wheelchair unit (2) from the bed unit (12) when, after completion of the sixth operation step, the depressed operating switch (8) is released and thereafter the operating switch (8) is depressed again.

11. A separatable bed comprising:
a wheelchair unit (2) including:
an operating switch (8) used for instructing combining operation or separating operation each formed of a plurality of operation steps, and a first controller (9); and
a bed unit (12),
**characterized in that** after at least one of the plurality of operation steps is completed, in the case of the operating switch (8) is continuously depressed, the first controller (9) does not cause the at least one of the operation steps to move on to a next one of the operation steps, and
in the case of the depressed operating switch (8) is released and thereafter the operating switch (8) is depressed again, the first controller causes the at least one of the operation steps to move on to the next one of the operation steps.

12. The separatable bed of claim 11, wherein in a first step of the operation steps or when one of the operation steps moves on to a next step of the operation steps, the first controller (9) transmits a signal in response to the operating switch (8) to at least one of the wheelchair unit (2) and the bed unit (12).

13. The separatable bed of claim 11, wherein
the wheelchair unit (2) further includes:
a chair part (3) including a backrest (30), a seat (32), and a footrest part (34); and
a first base part (5) supporting the chair part (3), and
in a case where
operation of tilting a bottom face of the seat (32) with respect to the first base part (5) by a predetermined angle is defined as tilting-ascending operation,
operation of bringing the bottom face of the seat (32) close to a state where the bottom face of the seat (32) is parallel to a top face of the first base part (5) is defined as tilting-descending operation, and
operation of making a top face of the seat (32), a top face of the footrest part (34), and a front face of the backrest (30) coplanar with each other is defined as reclining-descending operation,
as the plurality of operation steps in the combining operation, the first controller (9) sequentially performs a first operation step, a second operation step, a third operation step, and a fourth operation step such that
in the first operation step, the tilting-ascending operation is performed,
in the second operation step, the wheelchair unit (2) is brought close to the bed unit (12),
in the third operation step, the tilting-descending operation and the reclining-descending operation are performed, and
in the fourth operation step, the wheelchair unit (2) and the bed unit are (12) coupled.

14. The separatable bed of claim 11, wherein
the wheelchair unit (2) further includes:
a chair part (3) including a backrest (30), a seat (32), and a footrest part (34); and
a first base part (5) supporting the chair part (3), and
in a case where
operation of tilting a bottom face of the seat (32) with respect to the first base part (5) by a predetermined angle is defined as tilting-ascending operation and
operation of tilting at least the backrest (30) with respect to the seat (32) by a predetermined angle is defined as reclining-ascending operation,
as the plurality of operation steps in the separating operation, the first controller (9) sequentially performs a fifth operation step, a sixth operation step, and a seventh operation step such that
in the fifth operation step, the wheelchair unit (2) and the bed unit (12) are decoupled,
in the sixth operation step, the tilting-ascending operation and the reclining-ascending operation are performed, and
in the seventh operation step, the wheelchair unit (2) is separated from the bed unit (12).

## Patentansprüche

1. Verfahren zur Steuerung eines trennbaren Betts (1), bei dem das trennbare Bett eine Rollstuhleinheit (2) und eine Betteinheit (12) umfasst und die Rollstuhleinheit einen Bedienschalter (8) umfasst, der für Anweisung Kombinier-Vorgang oder Trenn-Vorgang, von denen jeder aus mehreren Bedienschritten gebildet wird, benutzt wird,
wobei das Verfahren **dadurch gekennzeichnet ist, dass**, nachdem mindestens einer der Bedienschritte abgeschlossen ist,
in dem Fall, dass der Bedienschalter (8) kontinuierlich gedrückt wird, der mindestens eine der Bedienschritte keine Bewegung zu einem nächsten der Bedienschritte ausführt, und
in dem Fall, dass der Bedienschalter (8) losgelassen und danach der Bedienschalter (8) erneut gedrückt wird, der mindestens eine der Bedienschritte eine Bewegung zu dem nächsten der Bedienschritte ausführt.

2. Verfahren zur Steuerung eines trennbaren Betts nach Anspruch 1, wobei die Rollstuhleinheit (2) ferner Folgendes aufweist:
einen Stuhlteil (3) mit einer Rückenlehne (30), einem Sitz (32) und einem Fußstützenteil (34); und
einen ersten Basisteil (5), der den Stuhlteil (3) abstützt, und
in einem Fall, wenn
ein Vorgang des Kippens einer Bodenfläche des Sitzes (32) in Bezug auf den ersten Basisteil (5) um einen im Voraus bestimmten Winkel als Kippen-Aufrichten-Vorgang definiert wird,
ein Vorgang des Absenkens der Bodenfläche des Sitzes (32) nahe einem Zustand, wenn die Bodenfläche des Sitzes (32) parallel mit einer oberen Oberfläche des ersten Basisteils (5) liegt, als Kippen-Absenken-Vorgang definiert wird, und
ein Vorgang des Anordnens einer oberen Oberfläche des Sitzes (32), einer oberen Oberfläche des Fußstützenteils (34) und einer Frontfläche der Rückenlehne (30) koplanar miteinander als Zurücklehnen-Absenken-Vorgang definiert wird,
da die mehreren Bedienschritte im Kombinationsvorgang, ein erster Bedienschritt, ein zweiter Bedienschritt, ein dritter Bedienschritt und ein vierter Bedienschritt sequenziell auf solche Weise ausgeführt werden, dass
im ersten Bedienschritt der Kippen-Aufrichten-Vorgang ausgeführt wird,
im zweiten Bedienschritt die Rollstuhleinheit (2) nahe an der Betteinheit (12) angeordnet wird,
im dritten Bedienschritt der Kippen-Absenken-Vorgang und der Zurücklehnen-Absenken-Vorgang ausgeführt wird, und
im vierten Bedienschritt die Rollstuhleinheit (2) und die Betteinheit (12) miteinander verbunden werden.

3. Verfahren zur Steuerung eines trennbaren Betts nach Anspruch 2, wobei der Kippen-Absenken-Vorgang und der Zurücklehnen-Absenken-Vorgang gleichzeitig im dritten Bedienschritt ausgeführt werden.

4. Verfahren zur Steuerung eines trennbaren Betts nach Anspruch 2, wobei, wenn der Bedienschalter (8) kontinuierlich gedrückt wird, der dritte Bedienschritt nicht angehalten wird und zum vierten Bedienschritt fortfährt.

5. Verfahren zur Steuerung eines trennbaren Betts nach Anspruch 2, wobei der zweite Bedienschritt einmal vor Abschluss des zweiten Bedienschritts angehalten wird, oder der dritte Bedienschritt einmal vor Abschluss des dritten Bedienschritts angehalten wird.

6. Verfahren zur Steuerung eines trennbaren Betts nach Anspruch 1, wobei die Rollstuhleinheit (2) ferner Folgendes aufweist:
einen Stuhlteil (3) mit einer Rückenlehne (30), einem Sitz (32) und einem Fußstützenteil (34); und
einen ersten Basisteil (5), der den Stuhlteil (3) abstützt, und
in einem Fall, wenn
ein Vorgang des Kippens einer Bodenfläche des Sitzes (32) im Verhältnis zum ersten Basisteil (5) um einen im Voraus bestimmten Winkel als ein Kippen-Aufrichten-Vorgang definiert ist, und
der Vorgang des Kippens mindestens der Rückenlehne (30) im Verhältnis zum Sitz (32) um einen im Voraus bestimmten Winkel als ein Zurücklehnen-Aufrichten-Vorgang definiert ist,
da die mehreren Bedienschritte im Abtrennvorgang, ein fünfter Bedienschritt, ein sechster Bedienschritt, und ein siebter Bedienschritt sequenziell auf solche Weise ausgeführt werden, dass
im fünften Bedienschritt die Rollstuhleinheit (2) und die Betteinheit (12) voneinander entkoppelt werden,
im sechsten Bedienschritt der Kippen-Aufrichten-Vorgang und der Zurücklehnen-Aufrichten-Vorgang ausgeführt werden, und
im siebten Bedienschritt die Rollstuhleinheit (2) von der Betteinheit (12) abgetrennt wird.

7. Verfahren zur Steuerung eines trennbaren Betts nach Anspruch 6, wobei der Kippen-Aufrichten-Vorgang und der Zurücklehnen-Aufrichten-Vorgang gleichzeitig im sechsten Bedienschritt ausgeführt werden.

8. Verfahren zur Steuerung eines trennbaren Betts nach Anspruch 6, wobei, wenn der Vorgang des Absenkens der Bodenfläche des Sitzes (32) nahe einem Zustand, wenn die Bodenfläche des Sitzes (32) parallel mit einer oberen Oberfläche des ersten Basisteils (5) liegt, als Kippen-Absenken-Vorgang definiert wird, wird ein achter Bedienschritt des Kippen-Absenken-Vorgangs nach dem siebten Bedienschritt ausgeführt.

9. Verfahren zur Steuerung eines trennbaren Betts nach Anspruch 1, wobei die Rollstuhleinheit (2) ferner Folgendes aufweist:
einen Stuhlteil (3) mit einer Rückenlehne (30), einem Sitz (32) und einem Fußstützenteil (34); und
einen ersten Basisteil (5), der den Stuhlteil (3) abstützt, und
in einem Zustand, wenn die Rollstuhleinheit (2) und die Betteinheit (12) voneinander abgetrennt sind, umfassen die mehreren Bedienschritte:
einen ersten Bedienschritt des Kippens des Stuhlteils (3) in einen im Voraus bestimmten Winkel im Verhältnis zum ersten Basisteil (5), wenn der Bedienschalter (8) gedrückt ist;
einen zweiten Bedienschritt des Anordnens der Rollstuhleinheit (2) nahe an der Betteinheit (12) wenn, nachdem der erste Bedienschritt abgeschlossen ist, der gedrückte Bedienschalter (8) losgelassen und danach der Bedienschalter (8) erneut gedrückt wird;
einen dritten Bedienschritt des Bewegens der Rückenlehne (30) auf solche Weise, dass die Frontfläche der Rückenlehne (30) koplanar mit einer oberen Oberfläche des Sitzes (32) angeordnet ist, wenn, nach Abschluss des zweiten Bedienschritts, der gedrückte Bedienschalter (8) losgelassen und danach der Bedienschalter (8) erneut gedrückt wird; und
einen vierten Bedienschritt des Koppelns der Rollstuhleinheit (2) an die Betteinheit (12), nachdem der dritte Bedienschritt abgeschlossen ist.

10. Verfahren zur Steuerung eines trennbaren Betts nach Anspruch 1, wobei die Rollstuhleinheit (2) Folgendes aufweist:
einen Stuhlteil (3) mit einer Rückenlehne (30), einem Sitz (32) und einem Fußstützenteil (34); und
einen ersten einen ersten Basisteil (5), der den Stuhlteil (3) abstützt, und
in einem Zustand, wenn die Rollstuhleinheit (2) und die Betteinheit (12) kombiniert sind, umfassen die mehreren Bedienschritte:
einen fünften Bedienschritt des Entkoppelns der Rollstuhleinheit (2) von der Betteinheit (12), wenn der Bedienschalter (8) gedrückt wird;
einen sechsten Bedienschritt des Bewegens der Rückenlehne (30) auf solche Weise, dass die Rückenlehne (30) um einen im Voraus bestimmten Winkel im Verhältnis zum Sitz (32) angeordnet ist, nachdem der fünfte Bedienschritt abgeschlossen ist; und
einen siebten Bedienschritt des Trennens der Rollstuhleinheit (2) von der Betteinheit (12), wenn, nachdem der sechste Bedienschritt abgeschlossen ist, der gedrückte Bedienschalter (8) losgelassen und danach der Bedienschalter (8) erneut gedrückt wird.

11. Trennbares Bett, aufweisend:
eine Rollstuhleinheit (2), aufweisend:
einen Bedienschalter (8), der für Anweisung Kombinier-Vorgang oder Trenn-Vorgang, von denen jeder aus mehreren Bedienschritten gebildet wird, benutzt wird, und eine erste Steuervorrichtung (9); und
eine Betteinheit (12),
**dadurch gekennzeichnet, dass**, nachdem mindestens einer der mehreren Bedienschritte abgeschlossen ist,
in dem Fall, dass der Bedienschalter (8) kontinuierlich gedrückt ist, die erste Steuervorrichtung (9) nicht bewirkt, dass der mindestens eine der mehreren Bedienschritte zu einem nächsten der Bedienschritte fortfährt, und
in dem Fall, dass der gedrückte Bedienschalter (8) losgelassen und danach der Bedienschalter (8) erneut gedrückt wird, die erste Steuervorrichtung bewirkt, dass der mindestens eine der mehreren Bedienschritte zum nächsten der Bedienschritte fortfährt.

12. Trennbares Bett nach Anspruch 11, wobei in einem ersten Schritt der Bedienschritte oder, wenn einer der Bedienschritte zu einem nächsten Schritt der Bedienschritte fortfährt, überträgt die erste Steuervorrichtung (9) ein Signal als Reaktion auf den Bedienschalter (8) an mindestens eines von der Rollstuhleinheit (2) und der Betteinheit (12).

13. Trennbares Bett nach Anspruch 11, wobei die Rollstuhleinheit (2) ferner Folgendes aufweist:
einen Stuhlteil (3) mit einer Rückenlehne (30), einem Sitz (32) und einem Fußstützenteil (34); und
einen ersten Basisteil (5), der den Stuhlteil (3) abstützt, und
in einem Fall, wenn
ein Vorgang des Kippens einer Bodenfläche des Sitzes (32) im Verhältnis zum ersten Basisteil (5) um einen im Voraus bestimmten Winkel als ein Kippen-Aufrichten-Vorgang definiert ist,
ein Vorgang des Anordnens der Bodenfläche des Sitzes (32) nahe einem Zustand, wenn die Bodenfläche des Sitzes (32) parallel mit einer oberen Oberfläche des ersten Basisteils (5) liegt, als Kippen-Absenken-Vorgang definiert wird, und
ein Vorgang des Anordnens einer oberen Oberfläche des Sitzes (32), einer oberen Oberfläche des Fußstützenteils (34) und einer Frontfläche der Rückenlehne (30) koplanar miteinander als Zurücklehnen-Absenken-Vorgang definiert wird,
als die mehreren Bedienschritte im Kombinationsvorgang, führt die erste Steuervorrichtung (9) einen ersten Bedienschritt, einen zweiten Bedienschritt, einen dritten Bedienschritt und einen vierten Bedienschritt sequenziell auf solche Weise aus, dass
im ersten Bedienschritt der Kippen-Aufrichten-Vorgang ausgeführt wird,
im zweiten Bedienschritt die Rollstuhleinheit (2) nahe an der Betteinheit (12) angeordnet wird,
im dritten Bedienschritt der Kippen-Absenken-Vorgang und der Zurücklehnen-Absenken-Vorgang ausgeführt wird, und
im vierten Bedienschritt die Rollstuhleinheit (2) und die Betteinheit (12) miteinander verbunden werden.

14. Trennbares Bett nach Anspruch 11, wobei die Rollstuhleinheit (2) ferner Folgendes aufweist:
einen Stuhlteil (3) mit einer Rückenlehne (30), einem Sitz (32) und einem Fußstützenteil (34); und
einen ersten Basisteil (5), der den Stuhlteil (3) abstützt, und
in einem Fall, wenn
ein Vorgang des Kippens einer Bodenfläche des Sitzes (32) in Bezug auf den ersten Basisteil (5) um einen im Voraus bestimmten Winkel als Kippen-Aufrichten-Vorgang definiert wird, und
ein Vorgang des Kippens mindestens der Rückenlehne (30) im Verhältnis zum Sitz (32) um einen im Voraus bestimmten Winkel als ein Zurücklehnen-Aufrichten-Vorgang definiert ist,
als die mehreren Bedienschritte im Kombinationsvorgang, führt die erste Steuervorrichtung (9) einen fünften Bedienschritt, einen sechsten Bedienschritt, und einen siebten Bedienschritt sequenziell auf solche Weise aus, dass
im fünften Bedienschritt die Rollstuhleinheit (2) und die Betteinheit (12) voneinander entkoppelt werden,
im sechsten Bedienschritt der Kippen-Aufrichten-Vorgang und der Zurücklehnen-Aufrichten-Vorgang ausgeführt werden, und
im siebten Bedienschritt die Rollstuhleinheit (2) von der Betteinheit (12) abgetrennt wird.

## Revendications

1. Procédé de commande d'un lit séparable (1), dans lequel le lit séparable comporte une unité de fauteuil roulant (2) et une unité de lit (12), et l'unité de fauteuil roulant comporte un commutateur d'actionnement (8) utilisé pour donner une instruction pour une opération de combinaison ou une opération de séparation, dont chacune est formée d'une pluralité d'étapes d'opération,
le procédé étant **caractérisé en ce que**
après l'achèvement d'au moins une étape des étapes d'opération,
dans le cas où le commutateur d'actionnement (8) est enfoncé en continu, l'au moins une étape des étapes d'opération ne passe pas à une étape suivante des étapes d'opération, et
dans le cas où le commutateur d'actionnement enfoncé (8) est relâché et par la suite le commutateur d'actionnement (8) est enfoncé à nouveau, l'au moins une étape des étapes d'opération passe à l'étape suivante des étapes d'opération.

2. Procédé de commande du lit séparable de la revendication 1, dans lequel
l'unité de fauteuil roulant (2) comporte en outre :
une partie de chaise (3) comportant un dossier (30), un siège (32) et une partie de repose-pieds (34) ; et
une première partie de base (5) supportant la partie de chaise (3), et
dans le cas où
une opération qui consiste à faire basculer une face inférieure du siège (32) par rapport à la première partie de base (5) d'un angle prédéterminé est définie en tant qu'opération de montée basculante,
une opération qui consiste à rapprocher la face inférieure du siège (32) d'un état où la face inférieure du siège (32) est parallèle à une face supérieure de la première partie de base (5) est définie en tant qu'opération de descente basculante, et
une opération qui consiste à rendre une face supérieure du siège (32), une face supérieure de la partie de repose-pieds (34) et une face avant du dossier (30) coplanaires les unes par rapport aux autres est définie en tant qu'opération de descente inclinable,
comme la pluralité d'étapes d'opération dans l'opération de combinaison, une première étape d'opération, une deuxième étape d'opération, une troisième étape d'opération et une quatrième étape d'opération sont effectuées séquentiellement de sorte que
dans la première étape d'opération, l'opération de montée basculante soit effectuée,
dans la deuxième étape d'opération, l'unité de fauteuil roulant (2) soit rapprochée de l'unité de lit (12),
dans la troisième étape d'opération, l'opération de descente basculante et l'opération de descente inclinable soient effectuées, et
dans la quatrième étape d'opération, l'unité de fauteuil roulant (2) et l'unité de lit (12) soient couplées.

3. Procédé de commande du lit séparable de la revendication 2, dans lequel l'opération de descente basculante et l'opération de descente inclinable sont effectuées simultanément dans la troisième étape d'opération.

4. Procédé de commande du lit séparable de la revendication 2, dans lequel, lorsque le commutateur d'actionnement (8) est enfoncé en continu, la troisième étape d'opération n'est pas arrêtée et passe à la quatrième étape d'opération.

5. Procédé de commande du lit séparable de la revendication 2, dans lequel la deuxième étape d'opération est arrêtée une fois avant l'achèvement de la deuxième étape d'opération, ou la troisième étape d'opération est arrêtée une fois avant l'achèvement de la troisième étape d'opération.

6. Procédé de commande du lit séparable de la revendication 1, dans lequel l'unité de fauteuil roulant (2) comporte en outre :
une partie de chaise (3) comportant un dossier (30), un siège (32) et une partie de repose-pieds (34) ; et
une première partie de base (5) supportant la partie de chaise (3), et
dans le cas où
une opération qui consiste à faire basculer une face inférieure du siège (32) par rapport à la première partie de base (5) d'un angle prédéterminé est définie en tant qu'opération de montée basculante et
une opération qui consiste à faire basculer au moins le dossier (30) par rapport au siège (32) d'un angle prédéterminé est définie en tant qu'opération de montée inclinable,
comme la pluralité d'étapes d'opération dans l'opération de séparation, une cinquième étape d'opération, une sixième étape d'opération et une septième étape d'opération sont effectuées séquentiellement de sorte que
dans la cinquième étape d'opération, l'unité de fauteuil roulant (2) et l'unité de lit (12) soient découplées,
dans la sixième étape d'opération, l'opération de montée basculante et l'opération de montée inclinable soient effectuées, et
dans la septième étape d'opération, l'unité de fauteuil roulant (2) soit séparée de l'unité de lit (12).

7. Procédé de commande du lit séparable de la revendication 6, dans lequel l'opération de montée basculante et l'opération de montée inclinable sont effectuées simultanément dans la sixième étape d'opération.

8. Procédé de commande du lit séparable de la revendication 6, dans lequel, lorsqu'une opération qui consiste à rapprocher la face inférieure du siège (32) d'un état où la face inférieure du siège (32) est parallèle à une face supérieure de la première partie de base (5) est définie en tant qu'opération de descente basculante, une huitième étape d'opération qui consiste à effectuer l'opération de descente basculante est effectuée après la septième étape d'opération.

9. Procédé de commande du lit séparable de la revendication 1, dans lequel
l'unité de fauteuil roulant (2) comporte :
une partie de chaise (3) comportant un dossier (30), un siège (32) et une partie de repose-pieds (34) ; et
une première partie de base (5) supportant la partie de chaise (3), et
dans un état où l'unité de fauteuil roulant (2) et l'unité de lit (12) sont séparées, la pluralité d'étapes d'opération comporte :
une première étape d'opération qui consiste à faire basculer la partie de chaise (3) d'un angle prédéterminé par rapport à la première partie de base (5) lorsque le commutateur d'actionnement (8) est enfoncé ;
une deuxième étape d'opération qui consiste à rapprocher l'unité de fauteuil roulant (2) de l'unité de lit (12) lorsque, après l'achèvement de la première étape d'opération, le commutateur d'actionnement enfoncé (8) est relâché et par la suite le commutateur d'actionnement (8) est enfoncé à nouveau ;
une troisième étape d'opération qui consiste à déplacer le dossier (30) de sorte qu'une face avant du dossier (30) soit coplanaire avec une face supérieure du siège (32) lorsque, après l'achèvement de la deuxième étape d'opération, le commutateur d'actionnement enfoncé (8) est relâché et par la suite le commutateur d'actionnement (8) est enfoncé de nouveau ; et
une quatrième étape d'opération qui consiste à coupler l'unité de fauteuil roulant (2) et l'unité de lit (12), après l'achèvement de la troisième étape d'opération.

10. Procédé de commande du lit séparable de la revendication 1, dans lequel
l'unité de fauteuil roulant (2) comporte :
une partie de chaise (3) comportant un dossier (30), un siège (32) et une partie de repose-pieds (34) ; et
une première partie de base (5) supportant la partie de chaise (3), et
dans un état où l'unité de fauteuil roulant (2) et l'unité de lit (12) sont combinées, la pluralité d'étapes d'opération comporte :
une cinquième étape d'opération qui consiste à découpler l'unité de fauteuil roulant (2) et l'unité de lit (12) lorsque le commutateur d'actionnement (8) est enfoncé ;
une sixième étape d'opération qui consiste à déplacer le dossier (30) de sorte que le dossier (30) ait un angle prédéterminé par rapport au siège (32), après l'achèvement de la cinquième étape d'opération ; et
une septième étape d'opération qui consiste à séparer l'unité de fauteuil roulant (2) de l'unité de lit (12) lorsque, après l'achèvement de la sixième étape d'opération, le commutateur d'actionnement enfoncé (8) est relâché et par la suite le commutateur d'actionnement (8) est enfoncé à nouveau.

11. Lit séparable comprenant :
une unité de fauteuil roulant (2) comportant :
un commutateur d'actionnement (8) utilisé pour donner une instruction pour une opération de combinaison ou une opération de séparation, dont chacune est formée d'une pluralité d'étapes d'opération, et une première unité de commande (9) ; et
une unité de lit (12),
**caractérisé en ce qu'**après l'achèvement d'au moins une étape de la pluralité d'étapes d'opération,
dans le cas où le commutateur d'actionnement (8) est enfoncé en continu, la première unité de commande (9) n'amène pas l'au moins une étape des étapes d'opération à passer à une étape suivante des étapes d'opération, et
dans le cas où le commutateur d'actionnement enfoncé (8) est relâché et par la suite le commutateur d'actionnement (8) est enfoncé à nouveau, la première unité de commande amène l'au moins une étape des étapes d'opération à passer à l'étape suivante des étapes d'opération.

12. Lit séparable de la revendication 11, dans lequel, dans une première étape des étapes d'opération ou lorsqu'une étape des étapes d'opération passe à une étape suivante des étapes d'opération, la première unité de commande (9) transmet un signal en réponse au commutateur d'actionnement (8) à au moins l'une de l'unité de fauteuil roulant (2) et de l'unité de lit (12).

13. Lit séparable de la revendication 11, dans lequel l'unité de fauteuil roulant (2) comporte en outre :
une partie de chaise (3) comportant un dossier (30), un siège (32) et une partie de repose-pieds (34) ; et
une première partie de base (5) supportant la partie de chaise (3), et
dans le cas où
une opération qui consiste à faire basculer une face inférieure du siège (32) par rapport à la première partie de base (5) d'un angle prédéterminé est définie en tant qu'opération de montée basculante,
une opération qui consiste à rapprocher la face inférieure du siège (32) d'un état où la face inférieure du siège (32) est parallèle à une face supérieure de la première partie de base (5) est définie en tant qu'opération de descente basculante, et
une opération qui consiste à rendre une face supérieure du siège (32), une face supérieure de la partie de repose-pieds (34) et une face avant du dossier (30) coplanaires les unes par rapport aux autres est définie an tant qu'opération de descente inclinable,
comme la pluralité d'étapes d'opération dans l'opération de combinaison, la première unité de commande (9) effectue séquentiellement une première étape d'opération, une deuxième étape d'opération, une troisième étape d'opération et une quatrième étape d'opération de sorte que
dans la première étape d'opération, l'opération de montée basculante soit effectuée,
dans la deuxième étape d'opération, l'unité de fauteuil roulant (2) soit rapprochée de l'unité de lit (12),
dans la troisième étape d'opération, l'opération de descente basculante et l'opération de descente inclinable soient effectuées, et
dans la quatrième étape d'opération, l'unité de fauteuil roulant (2) et l'unité de lit (12) soient couplées.

14. Lit séparable de la revendication 11, dans lequel l'unité de fauteuil roulant (2) comporte en outre :
une partie de chaise (3) comportant un dossier (30), un siège (32) et une partie de repose-pieds (34) ; et
une première partie de base (5) supportant la partie de chaise (3), et
dans le cas où
une opération qui consiste à faire basculer une face inférieure du siège (32) par rapport à la première partie de base (5) d'un angle prédéterminé est définie en tant qu'opération de montée basculante et
une opération qui consiste à faire basculer au moins le dossier (30) par rapport au siège (32) d'un angle prédéterminé est définie en tant qu'opération de montée inclinable,
comme la pluralité d'étapes d'opération dans l'opération de séparation, la première unité de commande (9) effectue séquentiellement une cinquième étape d'opération, une sixième étape d'opération et une septième étape d'opération de sorte que
dans la cinquième étape d'opération, l'unité de fauteuil roulant (2) et l'unité de lit (12) soient découplées,
dans la sixième étape d'opération, l'opération de montée basculante et l'opération de montée inclinable soient effectuées, et
dans la septième étape d'opération, l'unité de fauteuil roulant (2) soit séparée de l'unité de lit (12).
